(19) **Europäisches Patentamt**
**European Patent Office**
**Office européen des brevets**

(11) **EP 2 612 529 B1**

(12) **EUROPEAN PATENT SPECIFICATION**

(45) Date of publication and mention
of the grant of the patent:
**30.03.2016 Bulletin 2016/13**

(51) Int Cl.:
*H04W 72/08* (2009.01)        *H04W 84/08* (2009.01)
*H04W 92/20* (2009.01)

(21) Application number: **10763247.3**

(86) International application number:
**PCT/PL2010/000081**

(22) Date of filing: **01.09.2010**

(87) International publication number:
**WO 2012/030239 (08.03.2012 Gazette 2012/10)**

(54) **METHODS FOR COORDINATING CHANNEL SCANNING AMONG BASE STATIONS IN A NON-TRUNKED RADIO COMMUNICATION SYSTEM**

VERFAHREN ZUR KOORDINATION VON KANALABTASTUNG UNTER BASISSTATIONEN IN EINEM UNGEBÜNDELTEN FUNKKOMMUNIKATIONSSYSTEM

PROCÉDÉS PERMETTANT DE COORDONNER UN BALAYAGE DE CANAUX ENTRE DES STATIONS DE BASE DANS UN SYSTÈME DE RADIOCOMMUNICATION À RESSOURCES NON PARTAGÉES

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**10.07.2013 Bulletin 2013/28**

(73) Proprietor: **Motorola Solutions, Inc.**
**Schaumburg, IL 60196 (US)**

(72) Inventors:
• **JURZAK, Pawel**
**30-383 Krakow (PL)**

• **WIATROWSKI, David, G.**
**Woodstock**
**IL 60098 (US)**

(74) Representative: **Treleven, Colin**
**Optimus Patents Limited**
**Grove House**
**Lutyens Close**
**Chineham Court**
**Basingstoke Hampshire RG24 8AG (GB)**

(56) References cited:
WO-A2-2008/042536        GB-A- 2 324 931
US-A- 5 768 345        US-A- 6 047 175
US-A1- 2003 032 400

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

FIELD OF THE DISCLOSURE

The present disclosures relates generally to radio communication systems, and more particularly to methods for coordinating channel scanning among base stations in a non-trunked radio communication system.

BACKGROUND

Many varieties of two-way radio communications systems are known in the art. These include trunked radio communication systems and conventional (or non-trunked) radio communication systems.

In a trunked radio communication system, wireless communication device and base station or repeater may communicate in a trunked mode where infrastructure equipment dynamically assigns a requesting wireless communication device a channel to talk on and traffic is automatically assigned to one or more voice channels by a base station repeater. Wireless communication devices can use a pool of channels to form a virtually unlimited number of talkgroups. Thus, all talkgroups are served by all channels. A trunked radio communication system implements a centralized controller to achieve efficient utilization of available channels by taking advantage of the probability that not all talkgroups will need a channel for communication at the same time. For a given number of channels, a trunked radio communication system can accommodate a greater number of talkgroups in comparison to a conventional non-trunked radio communication system.

By contrast, in conventional non-trunked radio communication systems, wireless communication devices communicate through a base station or repeater without trunking or assistance of a centralized controller. Each talkgroup uses a separate channel for communication, and a transmitting radio simply chooses a channel to transmit on and transmits on that channel. The base stations in such systems implement channel scanning to monitor each channel for transmissions from the wireless communication devices. For example, a base station will regularly scan through a predetermined list of channels, and when a valid signal is received from a wireless communication device on a particular channel, the base station stops scanning, continues to stay on that channel, and re-transmits (or repeats) the signal it is receiving on that channel from the transmitting wireless communication device so that other wireless communication devices that belong to the same talkgroup (have specific channel set to the same one as the transmitting wireless communication device) can communicate with one another. The base station stops scanning because the repeater at each base station can only repeat one signal at a time, and therefore it is unnecessary to continue scanning until the call stops, at which time the base station begins scanning again.

In some scenarios, when two (or more) wireless communication devices are located within range of the same base station, one wireless communication device attempts to transmit while a first wireless communication device is participating in an active call through the base station. Even though the wireless communication devices are transmitting on different channels, one call will be not be detected because the base station will stop scanning after detecting the first call since it can only handle one call at a time. Thus, in this scenario, only one call will be handled and repeated by the base station.

One proposal for addressing this problem is to add another base station to the system so that calls on more than one channel can be handled at the same time.

When a second base station is added, one approach would be to have both base stations regularly scan all available channels. However, this can be problematic. For example, both base stations could potentially be repeating the same received signal on the same channel. This could cause problems such as destructive interference with respect to each repeated transmission at the recipient wireless communication devices that receive both repeated transmissions. In addition, two base stations would stay on the same channel, whereas there can be a call on another channel that will not be handled since both base stations are busy handling one channel.

To address this issue, one approach is to allocate the available channels that are to be scanned by each base station equally among them (e.g., if there are N channels, then one base station scans channels 1..N/2, and the other base station scans channels N/2+1...N). This way, the system can handle two calls at the same time.

While this approach improves system availability, there are drawbacks since it is possible to have two calls in the same set of channels in some scenarios. For example, when N = 10, and there are calls on channels 1 and 2, and the base station that is responsible for scan channels 1 through 5 is busy repeating the call on channel 1, then the call on channel 2 will not be repeated as there is only one base station assigned to channels between 1 and 5. Meanwhile, the second base station, which handles channels 6-10, will be idle. There is no way to ensure that one call is on channels 1 through N/2, and the other call is necessarily on channels N/2+1 through N.

US-A1-2003/0032400 provides a moveable frequency scanning radio receiver, which a user may employ to listen to a subset of frequencies in use in a particular area. The frequency scanning radio receiver solves the problem of needing to enter new frequencies to be scanned, each time that a listener moves the frequency scanning radio receiver to a new location, see para [0005] of US'400. The frequency scanning radio receiver is dynamically programmed with a set of operating frequencies, which are to be scanned by the frequency scanning radio receiver based upon the location of the frequency scanning radio receiver. A Global Positioning System (GPS) position locator circuit may provide location information. The frequency scanning radio receiver is 'dynamically reprogramrned' to monitor the frequencies of interest, by identifying a new location of the receiver when it is moved to a new location. See paras [0009], [0011] and [0013] of US'400. WO-A2-2008/042536 shows a system of at least two radios, for example a portable and a mobile radio, which can communicate with each other. In order to extend battery life and/or enhance scanning performance, one radio may scan on behalf of the other radio.

BRIEF DESCRIPTION OF THE FIGURES

The accompanying figures, where like reference numerals refer to identical or functionally similar elements throughout the separate views, together with the detailed description below, are incorporated in and form part of the specification, and serve to further illustrate embodiments of concepts that include the claimed invention, and explain various principles and advantages of those embodiments.

FIG. 1 is a block diagram of a conventional non-trunked two-way radio communication system in which various embodiments of the present invention can be implemented;

FIG. 2 is a block diagram of a base station in which various embodiments of the present invention can be implemented;

FIG. 3 is a flowchart illustrating a method for coordinating inbound radio frequency (RF) channel scanning among a plurality of base stations in accordance with some embodiments;

FIG. 4 is a flowchart illustrating a method for coordinating inbound radio frequency (RF) channel scanning among a plurality of base stations in accordance with some other embodiments; and

FIG. 5 is a table that illustrates an example implementation of the embodiments described with reference to FIG. 4.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present invention.
The apparatus and method components have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

DETAILED DESCRIPTION

The disclosed embodiments relate generally to coordinating channel scanning between a plurality of base stations that are part of a conventional non-trunked two-way radio communication system.
In accordance with some of the disclosed embodiments, the plurality of base stations are each configured to regularly scan a plurality of channels specified in a first scan list. The base stations are communicatively coupled to each other via a link. In response to receiving a signal from a wireless communication device over a first channel, a first base station transmits a first message to each of the other base stations over the link. The first message may indicate that the first channel is in use. In response to receiving the first message, each of the other base stations is configured to temporarily suspend scanning of the first channel while continuing to regularly scan other ones of the plurality of channels in the first scan list. This way there is no conflict between the first base station and the other base stations, and the other base stations can continue to monitor the other channels for incoming signals. When the first base station stops receiving the signal on the first channel, the first base station transmits a second message to each of the other base stations over the link. The second message may indicate that the first channel has been released and is no longer in use by the first base station. Upon receiving the second message, each of the other base stations may resume regular scanning of the plurality of channels specified in the first scan list including the first channel that was recently occupied by the first base station.
In accordance with other disclosed embodiments, the plurality of base stations are each configured to regularly scan an assigned particular subset of the set of possible channels available in the system. Each particular subset of channels that a particular base station has the primary responsibility for scanning can be specified in a primary scan list (PSL) for that particular base station. Each PSL can either be statically configured at time of deployment, and/or dynamically updated after deployment based on the number of base stations actually detected in the system. For example, a first base station can have a first primary scan list that includes a first channel, a second channel and possibly other channels of the set of possible channels available in the system. Similarly, a second base station can have a second primary scan list that includes at least one other channel of the set of possible channels available in the system that is not in the first primary scan list (or any other primary scan list of other base stations that might if deployed).

Upon receiving a valid signal on the first channel from a wireless communication device, the first base station transmits a first message over the link to the second base station. The first message indicates that the second base station is to temporarily begin scanning the second channel that is part of the first base station's PSL on behalf of the first base station while the first base station is busy repeating the signal being received on the first channel. Depending on the number of channels in the first base station's PSL, the first message might also indicate other channels (that are part of the first base station's PSL) that the second base station is to temporarily begin scanning on behalf of the first base station while it remains busy repeating the signal being received on the first channel. In addition, when the system includes more than two base stations, the first base station may transmit other different "first" messages over the link to the other base station(s), where each of the other different "first" messages indicates that the recipient base station is to temporarily begin scanning one or more channels that are part of the first base station's PSL on behalf of the first base station while the first base station is busy repeating the signal being received on the first channel. In other words, the first base station can distribute other channels in its PSL to other available base stations (i.e., other than the second base station). In some implementations, upon receiving the first message, the second base station will then update a temporary secondary scan list (TSSL) by adding the second channel to the TSSL, and temporarily begin scanning channels specified in the second PSL along with the second channel (and any other channels that are specified in the TSSL that correspond to the first base station's PSL or PSLs of other base stations). In addition, in some implementations, when/if the second base station starts repeating another call, if the system includes other base stations, then the second base station can distribute channels in its PSL and its TSSL to at least one of the other base stations that are part of the system. The recipient base stations (i.e., that receive the new channel assignments) can then add the newly assigned channels to their respective TSSLs.

When the first base station determines that it has stopped receiving the signal on the first channel (or when the first base station stops repeating the first call), the first base station transmits a second message (over the link) to the second base station that indicates that the second base station no longer needs to continue scanning the second channel. Moreover, in deployments where there are three or more base stations (i.e., at least one other base station in addition to the first and second base stations) and where the first base station has distributed other channels in its PSL to other available base stations (i.e., other than the second base station), then when the first base station determines that it has stopped receiving the signal on the first channel, the first base station may transmit or broadcast a second message (over the link) to the other base stations (including the second base station) that indicates that the other base stations no longer need to continue scanning the channels that are included in the first base station's PSL.

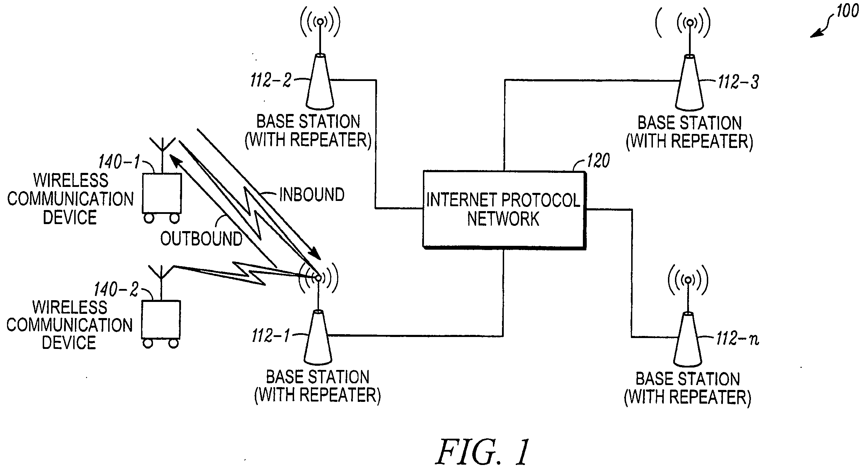

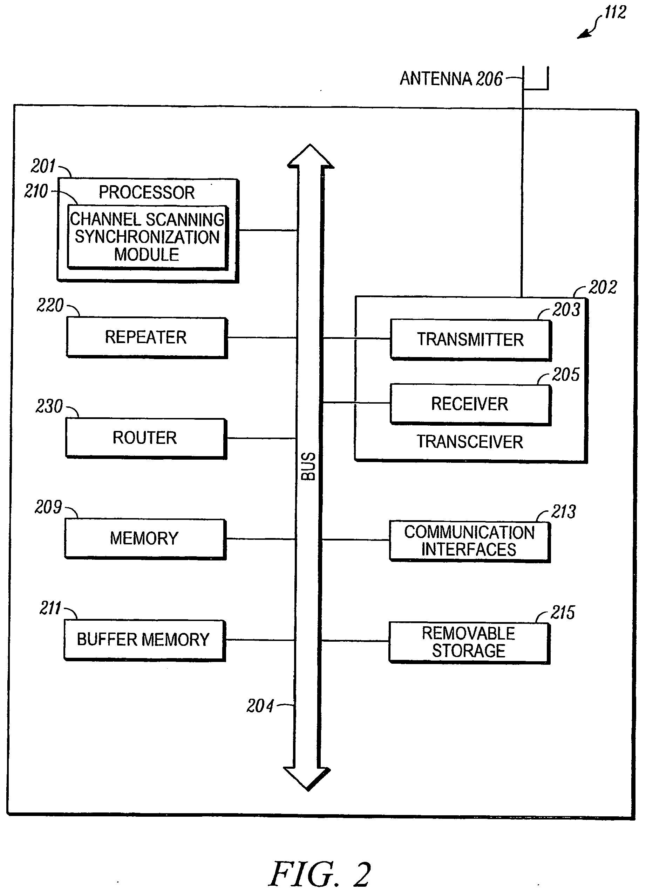

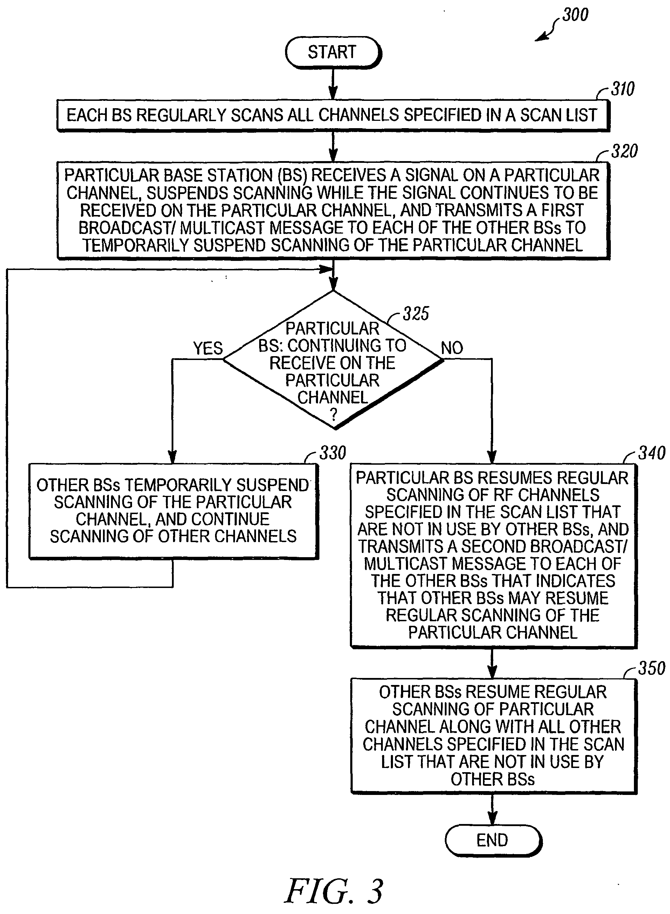

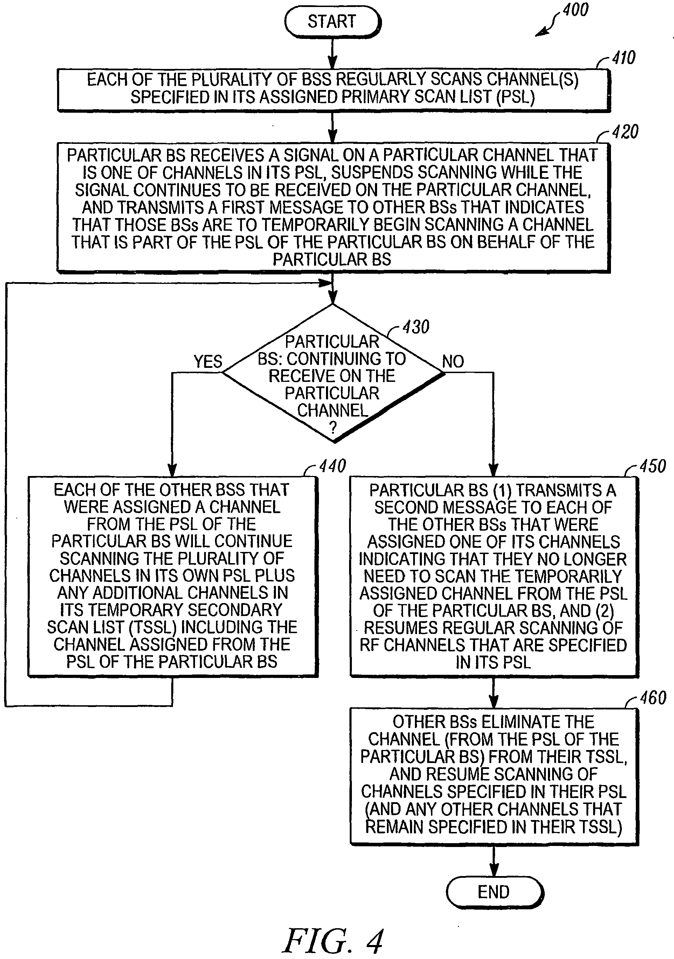

Prior to describing specific implementations of the various embodiments with reference to FIGS. 3 and 4, a description of one example of a conventional non-trunked two-way radio communication system will be described with reference to FIG. 1 followed by a description of one example of a base station with reference to FIG. 2. FIGS. 1 and 2 and corresponding descriptions are non-limiting and merely intended to show examples of a system and base station in which the various embodiments of the present invention can be implemented.

FIG. 1 is a block diagram of a conventional non-trunked two-way radio communication system 100 in which various embodiments of the present invention can be implemented.

According to some embodiments, the techniques described above can be used in radio communication systems, such as those specified by the Association of Public-Safety Communications Officials (APCO) Project 25 (P25) (or APCO-25) standards for digital two-way radio technology. Project 25 Phase I compliant communication systems implement an FDMA-based channel access scheme, whereas Project 25 Phase II compliant communication systems implement a TDMA-based channel access scheme. As is well-known to those skilled in the art, P25 refers to a suite of narrowband digital Land Wireless communication device (LMR) communication standards for digital radio communications, equipment and systems. P25 standards are produced through the joint efforts of the Association of Public Safety Communications Officials International (APCO), the National Association of State Telecommunications Directors (NASTD), selected Federal Agencies and the National Communications System (NCS), and standardized under the Telecommunications Industry Association (TIA). P25 standards specify a Common Air Interface (CAI) that defines the type and content of signals transmitted by P25-compliant radios. P25 phase 1-compliant radios can communicate directly with each other in "talk around" mode without any intervening equipment between two radios, or in conventional mode where a requesting radio chooses the channel to talk on and two radios communicate through a repeater or base station without trunking. Further details regarding the P25 standards can be obtained from the Telecommunications Industry Association, 2500 Wilson Boulevard, Suite 300 Arlington, VA 22201.

According to other embodiments, the techniques described above can be used in radio communication systems, such as those specified by the European Telecommunications Standards Institute (ETSI)'s digital wireless communication device (DMR) Tier-2 Standard, which is incorporated by reference herein in their entirety. The DMR standards have been and are currently being developed by the European Telecommunications Standards Institute (ETSI). Any of the DMR standards or specifications referred to herein may be obtained at http://www.etsi.org/WebSite/Standards/StandardsDownload.aspx or by contacting ETSI at ETSI Secretariat, 650, route des Lucioles, 06921 Sophia-Antipolis Cedex, FRANCE.

As illustrated in FIG. 1, the conventional non-trunked two-way radio communication system 100 may include a plurality (N) of base stations 112 that are communicatively coupled to each other via a communication link, and a plurality of wireless communication devices 140. In one implementation, the communication link can be an Internet Protocol (IP) based communication link for transferring information between the base stations. For ease of illustration, only two wireless communication devices and four base stations are shown. However, those skilled in the art will appreciate that a typical system can include any number of wireless communication devices and any number of base stations distributed about in any configuration.

The system 100 comprises a plurality of communications devices such as the illustrated wireless communication devices 140, which may be, for example, a portable/mobile radio, a personal digital assistant, a cellular telephone, a video terminal, a portable/mobile computer with a wireless modem, or any other wireless communication device. For purposes of the following discussions, the communication devices will be referred to as "wireless communication devices," but they are also referred to in the art as subscriber units, mobile stations, mobile equipment, handsets, mobile subscribers, or an equivalent.

As illustrated, for example, the wireless communication devices 140 communicate over wireless communication links with base stations 112 (with four base stations 112-1...112-n shown for sake of clarity). The base stations 112 may also be referred to as base radios, repeaters, access points, etc. The base stations 112 include at a minimum a repeater and a router and can also include other elements to facilitate the communications between wireless communication devices 140 and an Internet Protocol (IP) network 120. It will be appreciated by those of ordinary skill in the art that the base stations 112 and wireless communication devices 140 can be, for example, part of a wide area network (WAN) that is distributed over a wide area that spans multiple access networks.

In some implementations, the wireless communication devices 140 can communicate with each other through base stations 112. As is known by one of ordinary skill in the art, a base station generally comprises one or more repeater devices that can receive a signal from a transmitting wireless communication device over one wireless link and re-transmit to listening wireless communication devices over different wireless links. For example, wireless communication device 140-1 can transmit over one wireless link to base station 112-1 and base station 112-1 can re-transmit the signal to listening wireless communication device 140-2 over another wireless link. In addition, wireless communication device 140-1 may communicate with the other wireless communication devices in other "zones." Moreover, although in this embodiment communication between wireless communication devices 140 are illustrated as being facilitated by base station 112-1, in some implementations the wireless communication devices 140 can communicate directly with each other when they are in communication range of each other using a direct mode of operation without assistance of a base station 112.

Since network 100 is a wireless network the wireless communication devices 140 and the base stations 112 comprise transceivers that include a transmitter and a receiver for transmitting and receiving radio frequency (RF) signals, respectively. Typically, both the wireless communication devices 140, and the base stations 112, further comprise one or more processing devices (such as microprocessors, digital signal processors, customized processors, field programmable gate arrays (FPGAs), unique stored program instructions (including both software and firmware), state machines, and the like.) and memory elements for performing (among other functionality) the air interface protocol and channel access scheme supported by network 100. As will be described below, using these protocols, wireless communication devices 140 can each generate RF signals that are modulated with information for transmission to the mobile stations or the base stations.

Those skilled in the art will appreciate that the base stations 112 and wireless communication devices 140 may communicate with one another using a variety of air interface protocols or channel access schemes (e.g., Time Division Multiple Access (TDMA), Frequency Division Multiple Access (FDMA), and the like). In many implementations, it is desirable to improve or increase "spectral efficiency" of such systems so that more end-users can communicate more information in a given slice of RF spectrum. In some two-way digital radio systems, a particular channel (e.g., a 25 kilohertz (kHz) channel) can be divided to allow for a single channel to carry two or more calls at the same time. For instance, in one implementation, 25 kHz inbound and outbound sub-channels can be further divided using either Frequency Division Multiple Access (FDMA) or Time Division Multiple Access (TDMA) technologies to increase the number of wireless communication devices that can simultaneously utilize those sub-channels.

FDMA splits the channel frequency into two smaller sub-channels that can carry separate calls side-by-side. In some embodiments, the system 100 defines a number of channels, where each channel includes a pair of radio frequencies used to implement a frequency-division duplex system. More specifically, one radio frequency is used to implement an inbound RF channel and another radio frequency is used to implement a corresponding outbound RF channel that is associated with that inbound RF channel. As used herein, the term "inbound" refers to a communication originating from a wireless communication device that is destined for a base station, whereas the term "outbound" refers to a communication originating from a base station that is destined for a wireless communication device.

For example, Project 25 Phase I uses 12.5 kHz channels and currently uses FDMA for conventional digital systems. In such implementations, a single 25 kHz channel can be divided into a 12.5 kHz outbound sub-channel for use by the base station when communicating to one of its registered wireless communication devices and a 12.5 kHz inbound sub-channel for use by one of the registered wireless communication devices when communicating with its base station. In still other implementations, the inbound 12.5 kHz sub-channel can be further divided into two 6.25 kHz sub-sub-channels to allow two wireless communication devices to communicate with their base station at any given time using different 6.25 kHz frequency segments of the inbound sub-channel, and the outbound 12.5 kHz sub-channel can also be divided into two 6.25 kHz sub-sub-channels for communications from the base station to the two wireless communication devices.

By contrast, TDMA preserves the full channel width, but divides a channel into alternating time slots that can each carry an individual call. For example, Project 25 Phase II will add two-slot TDMA capabilities and the ETSI DMR Tier-2 standard specifies two-slot TDMA in 12.5 kHz channels. For instance, use of a 12.5 kHz inbound sub-channel can be further divided into two alternating time slots so that a particular wireless communication device can use the entire 12.5 kHz inbound sub-channel during a first time slot to communicate with the base station, and another wireless communication device can use the entire 12.5 kHz inbound sub-channel during a second time slot to communicate with the base station. Similarly, use of the 12.5 kHz outbound sub-channel can also be divided into two alternating time slots so that the particular base station can use the entire 12.5 kHz outbound sub-channel to communicate with a particular wireless communication device (or communication group of wireless communication devices) during a first time slot, and can use the entire 12.5 kHz outbound sub-channel to communicate with another particular wireless communication device (or another communication group of wireless communication devices) during a second time slot.

From the description above, it is evident that it is desirable to provide improved techniques for coordinating channel scanning among those base stations when multiple base stations are implemented in the conventional non-trunked radio communication system 100.

The disclosed embodiments provide techniques for coordinating channel scanning among base stations that are part of a conventional non-trunked radio communication system.

In accordance with some of the disclosed embodiments, one implementation of which will be described below with reference to FIG. 3, the plurality of base stations 112 are each configured to regularly scan a plurality of RF channels specified in a first scan list. In response to receiving a signal on a first RF channel, a first base station 112-1 transmits, over the communication link, a first message to each of the other base stations 112. In one implementation, the first message can be a set of unicast messages sent from the first base station 112-1 and individually addressed to each of the other base stations 112. In another implementation, the first message can be one or more multicast messages sent from the first base station 112-1 and addressed to particular groups of the other base stations 112. In yet another implementation, the first message can be a single broadcast message sent from the first base station 112-1 and addressed to all of the other base stations 112. The first message indicates that the first RF channel is in use. In response to receiving the first message, each of the other base stations 112 is configured to temporarily suspend scanning of the first RF channel while continuing to regularly scan other ones of the plurality of RF channels in the first scan list. When the first base station 112-1 stops receiving the signal on the first RF channel, the first base station 112-1 transmits, over the communication link, a second message to each of the other base stations 112. The second message indicates that the first RF channel is no longer in use. Upon receiving the second message, each of the other base stations 112 resumes regular scanning of the plurality of RF channels specified in the first scan list.

In accordance with other disclosed embodiments, one implementation of which will be described below with reference to FIG. 4, the plurality of base stations 112 are each configured to regularly scan a particular ones of a plurality of RF channels specified in a primary scan list (PSL) corresponding to that particular base station. For example, a first base station 112-1 can have a first primary scan list that comprises a first inbound RF channel and a second inbound RF channel, and a second base station 112-2 can have a second primary scan list that includes at least one other inbound RF channel. Upon receiving a signal on the first inbound RF channel, the first base station 112-1 transmits a first message over the communication link to the second base station 112-2. The first message indicates that the second base station 112-2 is to temporarily begin scanning at least the second inbound RF channel. In addition, when the system includes more than two base stations 112, the first base station 112-1 may transmit other different "first" messages over the link to the other base station(s), where each of the other different "first" messages indicates that the recipient base station is to temporarily begin scanning one or more channels that are part of the first base station's PSL on behalf of the first base station 112-1 while the first base station 112-1 is busy repeating the signal being received on the first channel. In other words, the first base station 112-1 can distribute other channels in its PSL to other available base stations 112 (i.e., other than the second base station 112-2).

In some implementations, upon receiving the first message, the second base station 112-2 will then update a temporary secondary scan list (TSSL) by adding the second inbound RF channel to the TSSL, and temporarily begin scanning the second inbound RF channel (and any other inbound RF channels that are specified in the TSSL) along with inbound RF channels specified in the second PSL. When the first base station 112-1 determines that it has stopped receiving the signal on the first inbound RF channel, the first base station 112-1 transmits a second message (over the communication link) to the second base station 112-2 that indicates that the second base station 112-2 no longer needs to continue scanning the second inbound RF channel. Moreover, in deployments where there are three or more base stations 112 (i.e., at least one other base station 112-3, 112-4 in addition to the first and second base stations 112-1, 112-2) and where the first base station 112-1 has distributed other channels in its PSL to other available base stations 112-3, 112-4 (i.e., other than the second base station 112-2), then when the first base station 112-1 determines that it has stopped receiving the signal on the first channel, the first base station 112-1 may transmit or broadcast a second message (over the link) to the other base stations 112-2, 112-3, 112-4 that indicates that the other base stations 112-2, 112-3, 112-4 no longer need to continue scanning the channels that are included in the first base station's PSL.

As will be described below, the disclosed embodiments can allow for scanning of channels to be synchronized or coordinated between base stations in an intelligent way that can increase channel availability and system capacity without implementing a centralized controller. In some embodiments, these methods can also allow a system to service a large number of channels with only a few base stations while minimizing the probability of situations where no base stations are available to handle a new call. This saves equipment cost to the customer.

Prior to describing some of the disclosed embodiments with reference to FIGS. 3 and 4, a brief description of a base station that can be used to implement the disclosed embodiments will now be provided with reference to FIG. 2.

FIG. 2 is a block diagram of a base station 112 in which various embodiments of the present invention can be implemented. The base station 112 comprises a processor 201, a transceiver 202 including a transmitter circuitry 203 and a receiver circuitry 205, an antenna 206, a memory 209 for storing operating instructions that are executed by the processor 201, a buffer memory 211, one or more communication interfaces 213, a removable storage unit 215, at least one repeater 220 and a router 230 that allows for communication with an IP network 120. Although not shown, the base station 112 also can include an antenna switch, duplexer, circulator, or other highly isolative means (not shown) for intermittently providing information from the transmitter circuitry 203 to the antenna 206 and from the antenna 206 to the receiver circuitry 205.

The processor 201 can include one or more microprocessors, microcontrollers, DSPs (digital signal processors), state machines, logic circuitry, or any other device or devices that process information based on operational or programming instructions. Such operational or programming instructions can be, for example, stored in the memory 209. As will be described in greater detail below, the processor 201 can include a channel scanning synchronization module 210 that is used to perform processing associated with channel scanning synchronization methods that will be described below with reference to FIGS. 3-4.

The memory 209 may be implemented using any known non-transitory computer-readable storage medium. Non-transitory computer-readable storage media comprise all computer-readable media except for a transitory, propagating signal and may include, for example, an IC (integrated circuit) memory chip containing any form of RAM (random-access memory) or ROM (read-only memory), a floppy disk, a CD-ROM (compact disk read-only memory), a hard disk drive, a DVD (digital video disc), a flash memory card or any other non-transitory medium for storing digital information.

One of ordinary skill in the art will recognize that when the processor 201 has one or more of its functions performed by a state machine or logic circuitry, the memory 209 containing the corresponding operational instructions may be embedded within the state machine or logic circuitry. The operations performed by the processor 201 and the rest of the base station 112 that will be described below with reference to FIGS. 3-4.

The transmitter circuitry 203 and the receiver circuitry 205 enable the base station 112 to communicate information to and acquire information from the wireless communication devices. In this regard, the transmitter circuitry 203 and the receiver circuitry 205 include conventional circuitry to enable digital or analog transmissions over a wireless communication channel sometimes referred to as a common air interface.

The implementations of the transmitter circuitry 203 and the receiver circuitry 205 depend on the implementation of the base station 112 and can be implemented as part of a hardware and software architecture in accordance with known techniques. Most, if not all, of the functions of the transmitter circuitry 203 and/or the receiver circuitry 205 may be implemented in a processor or processors, such as the processor 201. However, the processor 201, the transmitter circuitry 203, and the receiver circuitry 205 have been artificially partitioned herein to facilitate a better understanding.

The receiver circuitry 205 is capable of receiving radio frequency (RF) signals from at least one and in some cases multiple bandwidths, and the transmitter circuitry 203 may be capable of transmitting to multiple devices on multiple frequency bands.

The antenna 206 comprises any known or developed structure for radiating and receiving electromagnetic energy in the frequency range containing the wireless carrier frequencies.

The buffer memory 211 may be any form of volatile memory, such as RAM, and is used for temporarily storing received information.

The repeater 220 may comprise one or more electronic repeater devices that can receive a signal from a transmitting wireless communication device over one wireless link and re-transmit to listening wireless communication devices over different wireless links. In some implementations, the repeater 220 can receive a signal and retransmit it at a higher level and/or higher power so that the signal can cover longer distances. Although FIG. 2 illustrates an implementation in which the base station 112 includes a separate repeater 220 module, those skilled in the art will appreciate that the terms "base station" and "repeater" can be used interchangeably in some contexts. The terms "base station" and "repeater" are used interchangeably herein.

The router 230 may be communicatively coupled to the repeater 220 and allows the base station 112 to communicate other base stations (and other system nodes such as a console (not illustrated)) over the IP network 120.

As briefly described above, in accordance with some embodiments channel scanning synchronization methods are provided that can be implemented at two or more base stations.

FIG. 3 is a flowchart illustrating a method 300 for coordinating inbound RF channel scanning among a plurality (N) of base stations 112 in accordance with some embodiments. The plurality (N) of base stations 112 that are communicatively coupled to each over via a communication link and include at least a first base station 112-1 and a second base station 112-2, but can include several other base stations 112.

In a typical two-way (or non-trunked) radio communication system such as that described above, each of the base stations will scan available inbound radio frequency channels identified on a list to monitor or listen for activity on each RF channel that the base station is designed to operate on, and will lock-on to any active channels on which a valid signal is received. Thus, at step 310, each of the plurality of base stations 112 regularly scans a plurality of inbound RF channels that are specified in a first scan list. Depending on the implementation, the number of available inbound RF channels can vary, and may generally include any number of available inbound RF channels. In one embodiment, scanning includes monitoring or listening for activity on a particular inbound RF channel. In one embodiment, the mobile stations can be separated into talkgroups, and each talkgroup uses one inbound RF channel to transmit communications to the base station(s) and one outbound RF channel to receive communications from the base station(s). In one embodiment, the number of inbound RF channels is greater than the number (N) of base stations. In other words, the total number of base stations is less than the number of conventional inbound RF channels being scanned. In this embodiment, the first scan list specifies all of the inbound RF channels available in the network, and therefore all base stations will scan all inbound RF channels defined in the network in absence of a call occupying one or more of those RF channels, as will be described below. In another embodiment, the number of inbound RF channels is less than or equal to the number (N) of base stations, which provides some redundancy (e.g., backup/standby base stations).

At some point while the RF channels are being monitored or scanned, at step 320, the first base station 112-1 receives a signal on a "first" inbound RF channel that is one of the plurality of inbound RF channels. In general, the signal is a "valid" inbound RF signal received from one of the wireless communication units, and in one embodiment, the signal can indicate the beginning of a first call from the first wireless communication device 140-1, for example. In response to the valid inbound RF signal, the first base station 112-1 suspends regular scanning of all inbound RF channels while the valid inbound RF signal continues to be received on the first inbound RF channel. The first base station 112-1 also transmits a first message over the communication link to each of the other base stations 112, which include at least the second base station 112-2. In one embodiment, the first message indicates that the first inbound RF channel is in use (e.g., that the first call is taking place on the first inbound RF channel), and/or that other base stations are to temporarily suspend scanning of the first inbound RF channel until further notice.

At step 325, the first base station 112-1 determines whether it continues to receive on the first inbound RF channel.

When the first base station 112-1 continues to receive on the first inbound RF channel, the method proceeds to step 330, where the other base stations (that received the message) temporarily suspend scanning of the first inbound RF channel, and continue scanning other ones of the plurality of inbound RF channels in the first scan list that are not in use by any of the other base stations. For example, in one implementation, the other base stations can generate a modified scan list by removing the first inbound RF channel from the first scan list (i.e., so that the modified scan list excludes the first inbound RF channel and any other inbound RF channels in the first scan list that are in use by any of the other base stations) to temporarily suspend scanning of the first inbound RF channel, and continue regular scanning of the other ones of the plurality of inbound RF channels that remain specified in their modified scan lists.

When the first base station 112-1 determines that it has stopped receiving the valid inbound RF signal on the first inbound RF channel, the method proceeds to step 340, where the first base station 112-1 dekeys (terminates the call), resumes regular scanning of the RF channels that are specified in the first scan list (excluding any other inbound RF channels in the first scan list that are in use by any of the other base stations), and then transmits a second message over the communication link to each of the other base stations 112. The second message indicates that the first inbound RF channel has been released by the first base station 112-1 and is no longer in use.

At step 350, upon receiving the second message at each of the other base stations 112, the other base stations 112 can interpret the second message as indicating that the they are to resume regular scanning of the first inbound RF channel in conjunction with the other ones of the inbound RF channels that are specified in the first scan list (excluding any other inbound RF channels in the first scan list that are in use by any of the other base stations).

In other words, on the first pass though method 300, it is assumed that other base stations have not preempted scanning on any of the other ones of the inbound RF channels that are specified in the first scan list, and therefore the base stations 112 would resume regular scanning of the plurality of inbound RF channels that are specified in the first scan list. By contrast, if any other inbound RF channels in the first scan list that are in use by any of the other base stations, then the other base stations would suspend scanning of the preempted inbound RF channels similar to as is described above with respect to the first inbound RF channel.

FIG. 4 is a flowchart illustrating a method 400 for coordinating inbound RF channel scanning among a plurality of base stations 112 in accordance with some other embodiments. As in FIG. 3, the plurality of base stations 112 includes at least a first base station 112-1 and a second base station 112-2, but can include several other base stations 112. As above, the base stations are communicatively coupled to each over via a communication link

In this embodiment of a two-way (or non-trunked) radio communication system, the list of all available inbound radio frequency channels implemented in the system is split or divided into groups of available inbound radio frequency channels called primary scan lists. Each base station 112 can have a primary scan list (PSL). Each base station 112, when not involved in an active call, will have a primary responsibility for scanning inbound radio frequency channels in its primary scan list to monitor or listen for activity on those RF channels. In addition, as will be described below, each base station may possibly also temporarily inherit or take over a secondary responsibility for scanning at least one other inbound radio frequency channel that is the primary responsibility of another base station when that other base station is involved in an active call and unable to scan its other inbound radio frequency channel(s). The additional inbound RF channels assigned to a base station are included in a temporary secondary scan list (TSSL).

Thus, at step 410, when no active calls are taking place, each of the plurality of base stations 112 regularly scans inbound RF channel(s) that are specified in its PSL. Each of these inbound RF channels is described above.

At some point while the RF channels are being monitored or scanned, at step 420, the first base station 112-1 receives a signal on a "first" inbound RF channel that is one of the plurality of inbound RF channels in its PSL, and in response to the valid inbound RF signal, the first base station 112-1 suspends regular scanning of all other inbound RF channels in its PSL during the time while a valid inbound RF signal continues to be received on the first inbound RF channel, and transmits a first message over the communication link to at least one of the other base stations 112 (e.g., the base station 112-2). In one embodiment, the first message indicates that the first inbound RF channel is in use (e.g., that the first call is taking place on the first inbound RF channel), and/or that at least one of the other base stations (e.g., the second base station 112-2) are to temporarily begin scanning of one or more inbound RF channel that are part of the PSL of the first base station 112-1 until further notice.

Although not illustrated, in some scenarios, when the first base station 112-1 receives a signal the first base station 112-1 will have been scanning other channels in addition to those in its PSL, where the additional channels being scanned are part of a temporary secondary scan list (TSSL) for the first base station 112-1. The TSSL includes additional channels that the first base station 112-1 has temporarily assumed responsibility for scanning on behalf of another base station in the system. The first base station 112-1 will update its TSSL by adding the channel from the PSLs of other base stations whenever those other base stations request that the first base station 112-1 assume responsibility for one or more channels from the PSLs of the other base stations. The first base station 112-1 will then be responsible for temporarily scanning channels specified in that are specified in the TSSL of the first base station.

When the first base station 112-1 has a non-empty TSSL it can distribute channels in its PSL and its TSSL to other base station(s) that are part of the system by specifying any channels in its TSSL (along with those in its PSL) in the first message. This way, the first base station 112-1 can handoffresponsibility for scanning any channels in both its PSL and its TSSL to other base stations while first base station 112-1 is repeating the first call is taking place on the first inbound RF channel.

At step 430, the first base station 112-1 determines whether it continues to receive on the first inbound RF channel.

When the first base station 112-1 continues to receive on the first inbound RF channel, the method proceeds to step 440, where, in response to receiving the first message, the other base stations that were assigned an inbound RF channel that is part of the PSL of the first base station 112-1, create a TSSL, continue scanning the plurality of inbound RF channels in its PSL, and being scanning any additional inbound RF channel (that is part of the PSL of the first base station 112-1) that were added to its TSSL.

When the first base station 112-1 does not continue to receive on the first inbound RF channel (i.e., determines that it has stopped receiving the valid inbound RF signal on the first inbound RF channel, for example, when the call ends), the method proceeds to step 450, where the first base station 112-1 dekeys, and transmits a second message over the communication link to each of the other base stations 112 that were assigned one of its inbound RF channels (from its PSL), and resumes regular scanning of the RF channels that are specified in its PSL. The second message indicates to other base stations 112 that receive the second message that they no longer need to continue scanning the inbound RF channels in their respective TSSL that correspond to the PSL of the first base station 112-1 (i.e., that were specified in the first message from the first base station 112-1). In some embodiments, the second message may indicate that the first inbound RF channel has been released by the first base station 112-1 and is no longer in use. The other base stations 112 that receive the second message can interpret the second message as indicating that they no longer need to scan the inbound RF channel (from the PSL of the first base station 112-1) that was specified in the first message.

At step 460, upon receiving the second message at the other base stations 112, those base stations 112 eliminate the inbound RF channel (from the PSL of the first base station 112-1) from their TSSL, and resume scanning of the inbound RF channels specified in their PSL (and any other inbound RF channels that remain specified in their TSSL).

Example Implementation

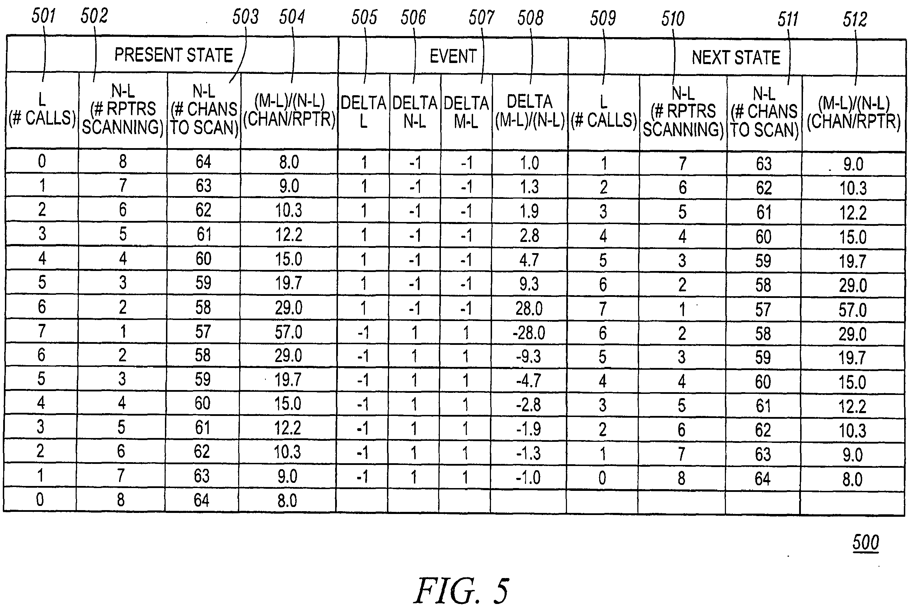

FIG. 5 is a table that illustrates an example implementation of the embodiments described with reference to FIG. 4. In FIG. 5, the variable N is the number of base stations in the system, which in this particular example is eight for purposes of illustrating one non-limiting implementation, the variable M is the number of channels of channels in the system, which in this particular example is 64 for purposes of illustrating one non-limiting implementation, and the variable L is the number of presently active calls in the system, which in this particular example ranges from zero (0) to seven (7) for purposes of illustrating one non-limiting implementation.

Columns 501-504 of table 500 show the present state. In particular, column 501 shows the number of active calls (L), column 502 shows the number of base stations that are actively scanning (N-L), column 503 shows the number of channels to be scanned (M-L), and column 504 shows the ratio (M -L) / (N -L) of the number of channels to be scanned (M-L) to the number of base stations that are actively scanning (N-L). In table 500, non-integer or fractional number of channels are shown in some instances. This means that all base stations receive the number of channels rounded down to an integer and some base stations receive the number of channels rounded up to an integer. How this is handled can vary depending on the implementation.

Columns 505-508 of table 500 show events. In particular, column 505 shows the change in the number of active calls (L), column 506 shows the change in the number of base stations that are actively scanning (N-L), column 507 shows the change in the number of channels to be scanned (M-L), and column 508 shows the change in the ratio (M - L) / (N - L) of the number of channels to be scanned (M-L) to the number of base stations that are actively scanning (N-L).

Columns 509-512 of table 500 show a next state. In particular, column 509 shows the number of active calls (L), column 510 shows the number of base stations that are scanning (N-L), column 511 shows the number of channels to be scanned (M-L), and column 512 shows the ratio (M - L) / (N -L) of the number of channels to be scanned (M-L) to the number of base stations that are actively scanning (N-L).

All base stations are provisioned with the entire list of channels to be scanned. At deployment or power up of the system, if a base station is unable to communicate with any other base stations, then the base station can either scan all M channels, or scan a set (M/N) of the channels, where each base station scans a non-overlapping set of channels.

Distribution of Channels Among Base Stations Upon Power Up Before Establishment of An Active Call With Any of the Base Stations

A first base station will initially power up and begin scanning. When a second base station powers up, it will find the first base station, establish a communication with it, and request a channel allocation. A similar process can be repeated as the third through eighth base stations come on line. For each base station that comes on line, each actively scanning base station gives a portion of its (M -L) / (N -L) channels to the newly available base station. In one non-limiting implementation, this can be done via the newly available base station sending a message (e.g., an IP-based broadcast message) requesting channels and the base stations responding by sending a message (e.g., an IP-based unicast message) containing the channels that are being transferred (reassigned). Each actively scanning base station gives up the following number of channels to the newly available base station:

$$(M - L) / ( (N - L)^2 + (N - L) ), \qquad \text{Equation (1)}$$

where N is the number of actively scanning base stations prior to the new base station joining the system. Equation (1) may produce non-integer or fractional number of channels in some instances. This means that all base stations receive the number of channels rounded down to an integer and some base stations receive the number of channels rounded up to an integer.

In the following description, it is presumed that all N base stations have all powered up, are able to communicate with each other, and are each scanning a number ((M-L)/(N-L)) of channels.

Distribution of Channels Among Base Stations Upon Establishment of An Active Call With One of the Base Stations

When a new call starts on a base station, the base station takes its remaining channels ((( M -L) / (N -L)) -1), divides them amongst the other N-L-1 base stations (i.e., (M-N)/((N-L)(N-L-1))), and communicates the channel list to the remaining (N-L-1) actively scanning base stations. In one non-limiting implementation, this can be done by sending a message (e.g., an IP-based unicast message) containing the channels that are being transferred (reassigned). Each remaining actively scanning base station receives the following number of additional channels to scan:

$$(M - N) / ( (N - L)^2 - (N - L) ), \qquad \text{Equation (2)}$$

where the number of active calls (L) prior to the new call starting is zero. Equation (2) may produce non-integer or fractional number of channels in some instances. This means that all base stations receive the number of channels rounded down to an integer and some base stations receive the number of channels rounded up to an integer.

Distribution of Channels Among Base Stations When An Active Call With One of the Base Stations Ends

When an active call ends on a base station, the base station informs the N-L base stations that are actively scanning that it is now available for scanning, and each actively scanning base station gives a portion of its (M - L) / (N - L) channels to the newly available base station. In one non-limiting implementation, this can be done via the newly available base station sending a message (e.g., an IP-based broadcast message) requesting channels and the actively scanning base stations responding by sending a message (e.g., an IP-based unicast message) containing the channels that are being transferred (reassigned). Each actively scanning base station gives up the following number of channels to the newly available base station:

$$(M - N) / ( (N - L)^2 + (N - L) ), \qquad \text{Equation (3)}$$

where L is the number of active calls prior to the call ending. This way, each scanning base station removes a proportionate number of channels from its active scan list and sends a list of those channels to the newly available base station such that all scanning base stations are scanning approximately the same number of channels. Equation (3) may produce non-integer or fractional number of channels in some instances. This means that all base stations give up the number of channels rounded down to an integer and some base stations give up the number of channels rounded up to an integer.

Distribution of Channels Among Base Stations In The Event One of the Base Stations Fails

In the event that one of the actively scanning base stations fails, each remaining actively scanning base station assumes a portion of the channels that were being scanned by the failed base station. The portion is computed as:

$$(M - L) / ( (N - L)(N - 1) ) \qquad \text{Equation (4)}$$

Equation (4) may produce non-integer or fractional number of channels in some instances. This means that all base stations assume the number of channels rounded down to an integer and some base stations assume the number of channels rounded up to an integer.

In the event one of the actively scanning base stations fails, one method for coordinating recovery is to have a single "master" base station (e.g., the first base station to establish the network, or the base station that has been in the network the longest) distribute the failed base station's channels evenly amongst the remaining scanning base stations.

In the foregoing specification, specific embodiments have been described. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of present teachings.

Even though the flow charts can be interpreted to imply some ordering in which the steps of methods 300, 400 are performed, those skilled in the art will appreciate that the various steps shown can be performed in an order different than is shown and further that the various steps can take place in parallel. As such, the various steps do not necessarily have to be performed in the particular order shown in FIGS. 3-4 unless the context implies that such ordering would be necessary (e.g., a step relies on a previous step).

**Claims**

1. In a non-trunked two-way radio communication system, a method (300) for coordinating channel scanning among a plurality, N, of base stations (112) that are communicatively coupled to each other via a link, the method (300) comprising:

    regularly scanning, at each of the plurality of base stations (112), a plurality of channels specified in a first scan list, the plurality of channels including a first channel;
    receiving a signal at a first base station (112-1) on the first channel;
    transmitting (320) from the first base station (112-1) over the link, in response to the signal, a first message to each of the other base stations (112) including a second base station (112-2), wherein the first message indicates that the first channel is in use; and
    in response to receiving the message at the second base station (112-2), temporarily suspending (330) scanning of the first channel at the second base station (112-2) and continuing scanning of other ones of the plurality of channels in the first scan list.

2. A method (300) according to claim 1, further comprising:

    when the first base station (112-1) stops receiving the signal on the first channel, transmitting (340) from the first base station (112-1) over the link a second message to each of the other base stations (112) including the second base station (112-2), wherein the second message indicates that the first channel is no longer in use; and
    upon receiving the second message at each of the plurality of base stations (112), restoring the first scan list at each of the plurality of base stations (112), and resuming (350) regularly scanning of the plurality of channels specified in the first scan list at each of the plurality of base stations (112).

3. A method according to claim 1, further comprising:

    suspending (420) regularly scanning at the first base station (112-1) while the signal is being received on the first channel; and
    when the first base station (112-1) stops receiving the signal on the first channel, resuming (450) regularly scanning of the plurality of channels specified in the first scan list at the first base station (112-1).

4. A method according to any previous claim, wherein the step of temporarily suspending (330) scanning of the first channel at the second base station (112-2) and continuing scanning of other ones of the plurality of channels in the first scan list, further comprises:

    in response to receiving the message at the second base station (112-2), modifying the first scan list at the second base station (112-2) by removing the first channel from the first scan list at the second base station (112-2) to generate a modified scan list to temporarily suspend scanning of the first channel at the second base station (112-2), wherein the plurality of channels in the modified scan list exclude the first channel; and
    continuing regularly scanning, at the second base station (112-2), other ones of the plurality of channels that remain specified in the modified scan list.

5. A method according to claim 2, wherein:

    (i) the first message indicates that the first channel is in use and that other base stations are to suspend scanning of the first channel; and/or
    (ii) the second message indicates that the first channel has been released by the first base station (112-1) and is no longer in use by the first base station (112-1), and that the other of the plurality of base stations are to resume regularly scanning the first channel.

6. A non-trunked two-way radio communication system (100) comprising a plurality, N, of base stations (112) that are communicatively coupled to each other via a communication link, wherein the plurality of base stations (112) are each configured to regularly scan a plurality of RF channels specified in a first scan list, wherein the plurality of base stations (112) comprise a first base station (112-1) that is configured to transmit over the communication link to each of the other base stations (112):

a first message, in response to receiving a signal on a first RF channel, that indicates that the first RF channel is in use, wherein each of the other base stations (112) is configured to temporarily suspend (330) scanning of the first RF channel in response to receiving the first message while continuing to regularly scan other ones of the plurality of RF channels in the first scan list.

7. The non-trunked two-way radio communication system (100) of claim 6, the first base station (112-1) further configured to transmit over the communication link to each of the other base stations (112):

a second message (340) that indicates that the first RF channel is no longer in use when the first base station (112-1) stops receiving the signal on the first RF channel, wherein each of the other base stations (112) is configured to resume (350) regular scanning of the plurality of RF channels specified in the first scan list upon receiving the second message.

**Patentansprüche**

1. Verfahren (300), in einem ungebündelten Zweiwegfunkkommunikationssystem, zur Koordination einer Kanalabtastung unter einer Mehrzahl, N, von Basisstationen (112), die wechselseitig über eine Verbindung kommunikativ gekoppelt sind, wobei das Verfahren (300) umfasst:

regelmäßige Abtastung, bei jeder von der Mehrzahl von Basisstationen (112), einer Mehrzahl von Kanälen, die in einer ersten Abtastliste spezifiziert sind, wobei die Mehrzahl von Kanälen einen ersten Kanal umfasst;
Empfang eines Signals bei einer ersten Basisstation (112-1) auf dem ersten Kanal;
Übertragung (320) von der ersten Basisstation (112-1) über die Verbindung, in Reaktion auf das Signal, einer ersten Nachricht an jede der anderen Basisstationen (112), die eine zweite Basisstation (112-2) umfassen, wobei die erste Nachricht anzeigt, dass der erste Kanal verwendet wird; und
in Reaktion auf einen Empfang der Nachricht bei der zweiten Basisstation (112-2), vorübergehende Aussetzung (330) einer Abtastung des ersten Kanals bei der zweiten Basisstation (112-2) und Fortsetzung einer Abtastung anderer von der Mehrzahl von Kanälen in der ersten Abtastliste.

2. Verfahren (300) gemäß Anspruch 1, das weiterhin umfasst:

wenn die erste Basisstation (112-1) aufhört, das Signal auf dem ersten Kanal zu empfangen, Übertragung (340) von der ersten Basisstation (112-1) über die Verbindung einer zweiten Nachricht an jede von den anderen Basisstationen (112), die die zweite Basisstation (112-2) umfassen, wobei die zweite Nachricht anzeigt, dass der erste Kanal nicht länger verwendet wird; und
nach einem Empfang der zweiten Nachricht bei jeder von der Mehrzahl von Basisstationen (112), Wiederherstellung der ersten Abtastliste bei jeder von der Mehrzahl von Basisstationen (112) und Wiederaufnahme (350) einer regelmäßigen Abtastung der Mehrzahl von Kanälen, die in der ersten Abtastliste bei jeder von der Mehrzahl von Basisstationen (112) spezifiziert sind.

3. Verfahren gemäß Anspruch 1, das weiterhin umfasst:

Aussetzung (420) einer regelmäßigen Abtastung bei der ersten Basisstation (112-1) während das Signal auf dem ersten Kanal empfangen wird; und
wenn die erste Basisstation (112-1) aufhört das Signal auf dem ersten Kanal zu empfangen, Wiederaufnahme (450) einer regelmäßigen Abtastung der Mehrzahl von Kanälen, die in der ersten Abtastliste bei der ersten Basisstation (112-1) spezifiziert sind.

4. Verfahren gemäß einem der vorangehenden Ansprüche, wobei der Schritt einer vorübergehenden Aussetzung (330) einer Abtastung des ersten Kanals bei der zweiten Basisstation (112-2) und Fortsetzung einer Abtastung anderer von der Mehrzahl von Kanälen in der ersten Abtastliste weiterhin umfasst:

in Reaktion auf einen Empfang der Nachricht bei der zweiten Basisstation (112-2), Modifizierung der ersten Abtastliste bei der zweiten Basisstation (112-2) durch Entfernung des ersten Kanals von der ersten Abtastliste bei der zweiten Basisstation (112-2) zur Erzeugung einer modifizierten Abtastliste zur vorübergehenden Aussetzung einer Abtastung des ersten Kanals bei der zweiten Basisstation (112-2), wobei die Mehrzahl von Kanälen in der modifizierten Abtastliste den ersten Kanal ausschließt; und

Fortsetzung einer regelmäßigen Abtastung, bei der zweiten Basisstation (112-2), anderer von der Mehrzahl von Kanälen, die in der modifizierten Abtastliste spezifiziert bleiben.

**5.** Verfahren gemäß Anspruch 2, wobei

(i) die erste Nachricht anzeigt, dass der erste Kanal verwendet wird und die anderen Basisstationen mit einem Abtasten des ersten Kanals aussetzen sollen; und/oder

(ii) die zweite Nachricht anzeigt, dass der erste Kanal durch die erste Basisstation (112-1) freigegeben worden ist und nicht länger durch die erste Basisstation (112-1) verwendet wird, und dass die andere von der Mehrzahl von Basisstationen eine regelmäßige Abtastung des ersten Kanals wieder aufnehmen soll.

**6.** Ungebündeltes Zweiwegfunkkommunikationssystem (100), das umfasst: eine Mehrzahl von Basisstationen (112), die wechselseitig über eine Kommunikationsverbindung kommunikativ gekoppelt sind, wobei die Mehrzahl von Basisstationen (112) geeignet ist eine Mehrzahl von RF-Kanälen regelmäßig abzutasten, die in einer ersten Abtastliste spezifiziert sind, wobei die Mehrzahl von Basisstationen (112) umfasst: eine erste Basisstation (112-1), die eingerichtet ist, über die Kommunikationsverbindung an jede der anderen Basisstationen (112) zu übertragen:

eine erste Nachricht, in Reaktion auf einen Empfang eines Signals auf dem ersten RF-Kanal, die anzeigt, dass der erste RF-Kanal verwendet wird, wobei jede von den anderen Basisstationen (112) geeignet ist, eine Abtastung des ersten RF-Kanals in Reaktion auf einen Empfang der ersten Nachricht vorübergehend auszusetzen (330), während sie fortfährt, andere von der Mehrzahl von RF-Kanälen in der ersten Abtastliste regelmäßig abzutasten.

**7.** Ungebündeltes Zweiwegfunkkommunikationssystem (100) gemäß Anspruch 6, wobei die erste Basisstation (112-1) weiterhin eingerichtet ist über die Kommunikationsverbindung an jede von den anderen Basisstationen (112) zu übertragen:

eine zweite Nachricht (340), die anzeigt, dass der erste RF-Kanal nicht länger verwendet wird, wenn die erste Basisstation (112-1) aufhört, das Signal auf dem ersten RF-Kanal zu empfangen, wobei jede von den anderen Basisstationen (112) geeignet ist, eine regelmäßige Abtastung der Mehrzahl von RF-Kanälen, die in der ersten Abtastliste spezifiziert sind, nach einem Empfang der zweiten Nachricht wieder aufzunehmen (350).

## Revendications

**1.** Dans un système de communication radio bidirectionnel à ressources non partagées, procédé (300) pour coordonner le balayage de canaux parmi une pluralité, N, de stations de base (112) qui sont couplées de manière communicative les unes aux autres via une liaison, le procédé (300), comprenant:

le balayage régulier, au niveau de chacune de la pluralité de stations de base (112), d'une pluralité de canaux spécifiés dans une première liste de balayage, la pluralité de canaux incluant un premier canal ;
la réception d'un signal au niveau d'une première station de base (112-1) sur le premier canal ;
la transmission (320) depuis la première station de base (112-1) sur la liaison, en réponse au signal, d'un premier message à chacune des autres stations de base (112) incluant une seconde station de base (112-2), où le premier message indique que le premier canal est en cours d'utilisation ; et
en réponse à la réception du message au niveau de la seconde station de base (112-2), la suspension temporaire (330) du balayage du premier canal au niveau de la seconde station de base (112-2) et la poursuite du balayage des autres de la pluralité de canaux dans la première liste de balayage.

**2.** Procédé (300) selon la revendication 1, comprenant en outre:

lorsque la première station de base (112-1) arrête de recevoir le signal sur le premier canal, la transmission (340) depuis la première station de base (112-1) sur la liaison d'un second message à chacune des autres stations de base (112) incluant la seconde station de base (112-2), où le second message indique que le premier canal n'est plus en cours d'utilisation ; et
lors de la réception du second message au niveau de chacune de la pluralité de stations de base (112), la restauration de la première liste de balayage au niveau de chacune de la pluralité de stations de base (112), et la reprise (350) du balayage régulier de la pluralité de canaux spécifiés dans la première liste de balayage au niveau de chacune de la pluralité de stations de base (112).

3. Procédé selon la revendication 1, comprenant en outre:

la suspension (420) du balayage régulier au niveau de la première station de base (112-1) pendant que le signal est reçu sur le premier canal ; et
lorsque la première station de base (112-1) arrête de recevoir le signal sur le premier canal, la reprise (450) du balayage régulier de la pluralité des canaux spécifiés dans la première liste de balayage au niveau de la première station de base (112-1).

4. Procédé selon l'une quelconque des revendications précédentes, dans lequel l'étape de suspension temporaire (330) du balayage du premier canal au niveau de la seconde station de base (112-2) et de poursuite du balayage d'autres de la pluralité de canaux dans la première liste de balayage, comprend en outre:

en réponse à la réception du message au niveau de la seconde station de base (112-2), la modification de la première liste de balayage au niveau de la seconde station de base (112-2) en retirant le premier canal de la première liste de balayage au niveau de la seconde station de base (112-2) afin de générer une liste de balayage modifiée pour suspendre temporairement le balayage du premier canal au niveau de la seconde station de base (112-2), où la pluralité de canaux dans la liste de balayage modifiée exclut le premier canal; et
la poursuite du balayage régulier, au niveau de la seconde station de base (112-2), d'autres de la pluralité de canaux qui restent spécifiés dans la liste de balayage modifiée.

5. Procédé selon la revendication 2, dans lequel:

(i) le premier message indique que le premier canal est en cours d'utilisation et que d'autres stations de base doivent suspendre le balayage du premier canal ; et/ou
(ii) le second message indique que le premier canal a été libéré par la première station de base (112-1) et n'est plus en cours d'utilisation par la première station de base (112-1), et que les autres de la pluralité de stations de base doivent reprendre le balayage régulier du premier canal.

6. Système de communication radio bidirectionnel à ressources non partagées (100) comprenant une pluralité, N, de stations de base (112) qui sont couplées de manière communicative les unes aux autres via une liaison de communication, dans lequel la pluralité de stations de base (112) sont chacune configurées pour balayer régulièrement une pluralité de canaux RF spécifiés dans une première liste de balayage, dans lequel la pluralité de stations de base (112) comprend une première station de base (112-1) qui est configurée pour transmettre sur la liaison de communication à chacune des autres stations de base (112):

un premier message, en réponse à la réception d'un signal sur un premier canal RF, qui indique que le premier canal RF est en cours d'utilisation, où chacune des autres stations de base (112) est configurée pour suspendre temporairement (330) le balayage du premier canal RF en réponse à la réception du premier message tout en continuant à balayer régulièrement d'autres de la pluralité de canaux RF dans la première liste de balayage.

7. Système de communication radio bidirectionnel à ressources non partagées (100) selon la revendication 6, la première station de base (112-1) en outre configurée pour transmettre sur la liaison de communication à chacune des autres stations de base (112):

un second message (340) qui indique que le premier canal RF n'est plus en cours d'utilisation lorsque la première station de base (112-1) arrête de recevoir le signal sur le premier canal RF, où chacune des autres stations de base (112) est configurée pour reprendre (350) le balayage régulier de la pluralité de canaux RF spécifiés dans la première liste de balayage lors de la réception du second message.

*FIG. 1*

EP 2 612 529 B1

FIG. 2

*300*

START

*310*

EACH BS REGULARLY SCANS ALL CHANNELS SPECIFIED IN A SCAN LIST

*320*

PARTICULAR BASE STATION (BS) RECEIVES A SIGNAL ON A PARTICULAR CHANNEL, SUSPENDS SCANNING WHILE THE SIGNAL CONTINUES TO BE RECEIVED ON THE PARTICULAR CHANNEL, AND TRANSMITS A FIRST BROADCAST/ MULTICAST MESSAGE TO EACH OF THE OTHER BSs TO TEMPORARILY SUSPEND SCANNING OF THE PARTICULAR CHANNEL

*325*

PARTICULAR BS: CONTINUING TO RECEIVE ON THE PARTICULAR CHANNEL ?

YES          NO

*330*

OTHER BSs TEMPORARILY SUSPEND SCANNING OF THE PARTICULAR CHANNEL, AND CONTINUE SCANNING OF OTHER CHANNELS

*340*

PARTICULAR BS RESUMES REGULAR SCANNING OF RF CHANNELS SPECIFIED IN THE SCAN LIST THAT ARE NOT IN USE BY OTHER BSs, AND TRANSMITS A SECOND BROADCAST/ MULTICAST MESSAGE TO EACH OF THE OTHER BSs THAT INDICATES THAT OTHER BSs MAY RESUME REGULAR SCANNING OF THE PARTICULAR CHANNEL

*350*

OTHER BSs RESUME REGULAR SCANNING OF PARTICULAR CHANNEL ALONG WITH ALL OTHER CHANNELS SPECIFIED IN THE SCAN LIST THAT ARE NOT IN USE BY OTHER BSs

END

*FIG. 3*

START

400

410
EACH OF THE PLURALITY OF BSS REGULARLY SCANS CHANNEL(S)
SPECIFIED IN ITS ASSIGNED PRIMARY SCAN LIST (PSL)

420
PARTICULAR BS RECEIVES A SIGNAL ON A PARTICULAR CHANNEL THAT
IS ONE OF CHANNELS IN ITS PSL, SUSPENDS SCANNING WHILE THE
SIGNAL CONTINUES TO BE RECEIVED ON THE PARTICULAR CHANNEL,
AND TRANSMITS A FIRST MESSAGE TO OTHER BSs THAT INDICATES
THAT THOSE BSs ARE TO TEMPORARILY BEGIN SCANNING A CHANNEL
THAT IS PART OF THE PSL OF THE PARTICULAR BS ON BEHALF OF THE
PARTICULAR BS

430
PARTICULAR
BS: CONTINUING TO
RECEIVE ON THE
PARTICULAR
CHANNEL
?

YES                                NO

440
EACH OF THE OTHER BSS THAT
WERE ASSIGNED A CHANNEL
FROM THE PSL OF THE
PARTICULAR BS WILL CONTINUE
SCANNING THE PLURALITY OF
CHANNELS IN ITS OWN PSL PLUS
ANY ADDITIONAL CHANNELS IN
ITS TEMPORARY SECONDARY
SCAN LIST (TSSL) INCLUDING THE
CHANNEL ASSIGNED FROM THE
PSL OF THE PARTICULAR BS

450
PARTICULAR BS (1) TRANSMITS A
SECOND MESSAGE TO EACH OF
THE OTHER BSs THAT WERE
ASSIGNED ONE OF ITS CHANNELS
INDICATING THAT THEY NO LONGER
NEED TO SCAN THE TEMPORARILY
ASSIGNED CHANNEL FROM THE PSL
OF THE PARTICULAR BS, AND (2)
RESUMES REGULAR SCANNING OF
RF CHANNELS THAT ARE SPECIFIED
IN ITS PSL

460
OTHER BSs ELIMINATE THE
CHANNEL (FROM THE PSL OF THE
PARTICULAR BS) FROM THEIR TSSL,
AND RESUME SCANNING OF
CHANNELS SPECIFIED IN THEIR PSL
(AND ANY OTHER CHANNELS THAT
REMAIN SPECIFIED IN THEIR TSSL)

END

*FIG. 4*

| | PRESENT STATE | | | | EVENT | | | | NEXT STATE | | |
|---|---|---|---|---|---|---|---|---|---|---|---|
| L (# CALLS) | N-L (# RPTRS SCANNING) | N-L (# CHANS TO SCAN) | (M-L)/(N-L) (CHAN/RPTR) | DELTA L | DELTA N-L | DELTA M-L | DELTA (M-L)/(N-L) | L (# CALLS) | N-L (# RPTRS SCANNING) | N-L (# CHANS TO SCAN) | (M-L)/(N-L) (CHAN/RPTR) |
| 0 | 8 | 64 | 8.0 | 1 | -1 | -1 | 1.0 | 1 | 7 | 63 | 9.0 |
| 1 | 7 | 63 | 9.0 | 1 | -1 | -1 | 1.3 | 2 | 6 | 62 | 10.3 |
| 2 | 6 | 62 | 10.3 | 1 | -1 | -1 | 1.9 | 3 | 5 | 61 | 12.2 |
| 3 | 5 | 61 | 12.2 | 1 | -1 | -1 | 2.8 | 4 | 4 | 60 | 15.0 |
| 4 | 4 | 60 | 15.0 | 1 | -1 | -1 | 4.7 | 5 | 3 | 59 | 19.7 |
| 5 | 3 | 59 | 19.7 | 1 | -1 | -1 | 9.3 | 6 | 2 | 58 | 29.0 |
| 6 | 2 | 58 | 29.0 | 1 | -1 | -1 | 28.0 | 7 | 1 | 57 | 57.0 |
| 7 | 1 | 57 | 57.0 | -1 | 1 | 1 | -28.0 | 6 | 2 | 58 | 29.0 |
| 6 | 2 | 58 | 29.0 | -1 | 1 | 1 | -9.3 | 5 | 3 | 59 | 19.7 |
| 5 | 3 | 59 | 19.7 | -1 | 1 | 1 | -4.7 | 4 | 4 | 60 | 15.0 |
| 4 | 4 | 60 | 15.0 | -1 | 1 | 1 | -2.8 | 3 | 5 | 61 | 12.2 |
| 3 | 5 | 61 | 12.2 | -1 | 1 | 1 | -1.9 | 2 | 6 | 62 | 10.3 |
| 2 | 6 | 62 | 10.3 | -1 | 1 | 1 | -1.3 | 1 | 7 | 63 | 9.0 |
| 1 | 7 | 63 | 9.0 | -1 | 1 | 1 | -1.0 | 0 | 8 | 64 | 8.0 |
| 0 | 8 | 64 | 8.0 | | | | | | | | |

501 502 503 504 505 506 507 508 509 510 511 512

500

*FIG. 5*

EP 2 612 529 B1

**EP 2 612 529 B1**

**REFERENCES CITED IN THE DESCRIPTION**

**Patent documents cited in the description**

- US 20030032400 A1
- WO 2008042536 A2